# FASCICULE DE BREVET EUROPEEN

(11) **EP 3 853 043 B1**
(45) Date de publication et mention de la délivrance du brevet: **17.08.2022**
(21) Numéro de dépôt: 19795250.0
(22) Date de dépôt: 13.09.2019
(51) Int. Cl.: B60C 1/00, C08L 7/00, C08L 9/06, C08K 3/36, B60C 15/00

(54) **PNEUMATIQUE AVEC BOURRELETS COMPRENANT UNE COMPOSITION DE CAOUTCHOUC SPECIFIQUE**
REIFEN MIT WULSTEN AUS EINER SPEZIFISCHEN KAUTSCHUKZUSAMMENSETZUNG
TIRE WITH BEADS COMPRISING A SPECIFIC RUBBER COMPOSITION

(30) Priorité: 17.09.2018 FR 1858345
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: BELIN, Lionel, 63040 Clermont-Ferrand Cedex 9 (FR); MARECHAL, Jean-Marc, 63040 Clermont-Ferrand Cedex 9 (FR)
(74) Mandataire: Louret, Sylvain
(86) Numéro de dépôt international: PCT/FR2019/052131
(87) Numéro de publication internationale: WO 2020/058611

(56) Documents cités:
- FR-A1- 2 940 187
- FR-A1- 2 940 189

## Description

### Domaine technique de l'invention

La présente invention concerne un pneumatique, en particulier pour véhicules de tourisme.

### Art antérieur

Les pneumatiques pour véhicules de tourisme comportent habituellement :
- deux bourrelets destinés à entrer en contact avec une jante de montage, chaque bourrelet comportant au moins une structure annulaire de renforcement dite « tringle » ainsi qu'un bourrage, le bourrage étant situé radialement à l'extérieur de la structure annulaire de renforcement ;
- deux flancs prolongeant les bourrelets radialement vers l'extérieur et s'unissant dans un sommet comprenant une bande de roulement ;
- au moins une armature de carcasse s'étendant depuis les bourrelets à travers les flancs jusqu'au sommet, et comportant une pluralité d'éléments de renforcement de carcasse.

Dans un arrangement particulier, chaque bourrelet peut comporter en outre une bande latérale placée axialement à l'extérieur de l'armature de carcasse et du bourrage. Une telle structure est bien connue de l'Homme du métier et est, par exemple, décrite dans les documents FR 2 940 187 et FR 2 940 188.

On souhaite que les compositions de caoutchouc mises en œuvre dans les pneumatiques présentent la meilleure processabilité possible, c'est-à-dire qu'elles soient faciles à mettre en forme et conservent cette forme jusqu'à leur incorporation dans le pneumatique afin, en particulier, que l'architecture de ce dernier soit respectée. La processabilité de la composition de caoutchouc est liée à certaines propriétés à cru, notamment sa plasticité, qui est souvent difficile à concilier avec l'obtention des performances en termes de rigidité et d'endurance.

On connait du document FR 2 940 189 une composition de caoutchouc utilisée pour réaliser la bande latérale comprenant au moins une charge renforçante majoritaire spécifique constituée par un noir de carbone ayant une surface spécifique CTAB inférieure à 10 m²/g et permettant de réduire la résistance au roulement du pneumatique. Ce document n'aborde pas l'aspect endurance du pneumatique.

Poursuivant ses recherches, la demanderesse a découvert que l'association de certains élastomères diéniques avec une charge inorganique permettait d'obtenir une composition pour bourrelets de pneumatiques présentant une excellente processabilité tout en permettant de maintenir, voire d'améliorer en particulier les propriétés d'endurance et de rigidité.

### Description détaillée de l'invention

L'invention a pour objet un pneumatique comprenant deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature de carcasse étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
et optionnellement une couche interne située axialement à l'extérieur de l'armature de carcasse et du bourrage tringle, dite bande latérale, caractérisé en ce que les bourrelets comprennent une composition de caoutchouc C à base de :
- un copolymère à base de styrène et de butadiène ;
- un élastomère isoprénique ;
- une charge renforçante comprenant de 30 à 70 pce de silice ;
- un système de réticulation.

### Définitions

L'expression « radial » se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

Par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Deux éléments de renforcement sont dits « parallèles » dans ce document lorsque l'angle formé entre les deux éléments est inférieur ou égal à 20°.

Par l'expression "partie en poids pour cent parties en poids d'élastomère" (ou pce), il faut entendre au sens de la présente invention, la partie, en masse pour cent parties en masse d'élastomère ou de caoutchouc, les deux termes étant synonymes.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. De préférence par majoritaire, on entend présent à plus de 50%, de préférence plus de 60%, 70%, 80%, 90%, et plus préférentiellement le composé « majoritaire » représente 100%.

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Pneumatique

Le pneumatique selon l'invention comprend deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
- éventuellement une couche interne située axialement à l'extérieur de l'armature de carcasse et du bourrage tringle, dite bande latérale.

Par couche interne, on entend une couche qui n'est en contact ni avec l'air ambiant, ni avec le gaz de gonflage. De manière connue, il est possible de définir au sein du pneumatique trois types de zones :
- La zone radialement extérieure et en contact avec l'air ambiant, cette zone étant essentiellement constituée de la bande de roulement et du flanc externe du pneumatique.
- La zone radialement intérieure et en contact avec le gaz de gonflage, cette zone étant généralement constituée par la couche étanche aux gaz de gonflage, dite couche d'étanchéité et parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes de pneumatiques. Ce type de couche peut être par exemple une sous-couche de bande de roulement, une couche du sommet du pneumatique, une nappe carcasse, une couche du bourrelet, ou toute autre couche qui n'est pas en contact avec l'air ambiant ou le gaz de gonflage du pneumatique.

L'armature de carcasse comporte typiquement une pluralité d'éléments de renforcement de carcasse et est ancrée dans les deux bourrelets, par exemple par un retournement autour de la structure annulaire de renforcement, de manière à former dans chaque bourrelet un brin aller et un brin retour, chaque brin retour s'étendant radialement à l'extérieur jusqu'à une extrémité située à une distance radiale DRR du point radialement le plus à l'intérieur de la structure annulaire de renforcement du bourrelet, la distance radiale DRR étant de manière préférée supérieure ou égale à 15 % de la hauteur radiale H du pneumatique.

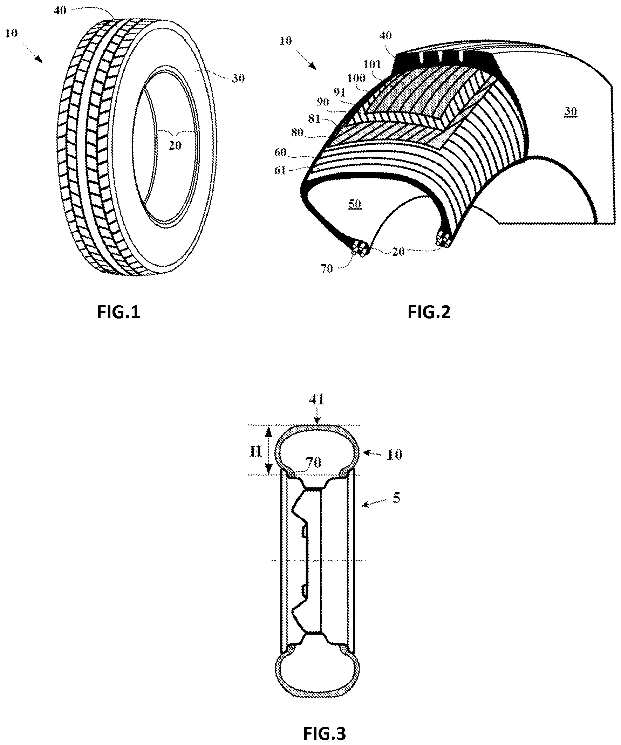

En référence à la figure 3, la « hauteur radiale » H d'un pneumatique est définie comme la distance radiale entre le point 71 radialement le plus à l'intérieur de la structure annulaire de renforcement 70 du bourrelet 20 et le point 41 radialement le plus à l'extérieur de la bande de roulement 40 lorsque le pneumatique 10 est monté sur une jante de montage 5 et gonflé à sa pression de service.

Par élément de renfort, ou élément de renforcement métallique ou textile, on entend un élément sous la forme d'un fil ou d'un câble, en tout ou partie métallique ou textile. En particulier, ledit élément de renfort peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Ledit élément de renfort peut être de nature métallique, c'est-à-dire comprendre un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton.

Chaque bourrelet comporte une couche interne dite bourrage tringle, ledit bourrage s'étendant radialement vers l'extérieur depuis ladite tringle et au contact de ladite armature de carcasse, préférentiellement au moins situé partiellement entre le brin aller et le brin retour de l'armature de carcasse lorsque celle-ci est ancrée par un retournement autour de ladite tringle. Le bourrage tringle s'étend préférentiellement radialement à l'extérieur du point radialement le plus à l'intérieur de la tringle du bourrelet jusqu'à une distance radiale DRB dudit point, la distance radiale DRB étant supérieure ou égale à 20 % de la hauteur radiale H du pneumatique.

Chaque bourrelet comporte éventuellement en outre une couche interne dite bande latérale, placée axialement à l'extérieur de l'armature de carcasse et du bourrage tringle, chaque bande latérale s'étendant préférentiellement radialement à l'extérieur d'une extrémité radialement intérieure située à une distance DRI du point radialement le plus à l'intérieur de la tringle du bourrelet, DRI étant inférieure ou égale à 20 % de la hauteur radiale H du pneumatique, jusqu'à une extrémité radialement extérieure située radialement à l'extérieur du point radialement le plus à l'intérieur de la tringle du bourrelet, la distance radiale DRL entre l'extrémité radialement extérieure de la bande latérale et l'extrémité radialement intérieure de la bande latérale étant de manière préférée supérieure ou égale à 25 % de la hauteur radiale H du pneumatique.

De manière préférée, chaque bourrelet du pneumatique selon l'invention comprend une bande latérale constituée de ladite composition de caoutchouc C. De manière préférée, le bourrage tringle comprend ladite composition de caoutchouc C.

Dans un autre arrangement particulier, le pneumatique selon l'invention comprend deux inserts de flanc, situés axialement entre l'armature de carcasse et la couche d'étanchéité.

Ces inserts de flancs, connus de l'Homme du métier, permettent de renforcer les flancs et ainsi de supporter une charge lorsque la pression du pneumatique est réduite, voire nulle, autorisant ainsi le pneumatique à rouler sur une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat. De tels pneumatiques sont connus, par exemple, des brevets US 4,779,658, US 5,769,980, US 6,022,434, US 7,093,633 ou FR 3 005 471.

Chaque insert de flanc présente une section radiale caractéristique en forme de croissant et est fabriqué à partir d'une composition de caoutchouc à base d'une composition de caoutchouc réticulable. Chaque insert doit présenter des propriétés à cuit, notamment une rigidité suffisante, pour supporter au moins partiellement la charge à pression réduite, voire sans pression.

Par définition dans le cadre de la présente, les inserts de flanc, situés axialement entre l'armature de carcasse et la couche d'étanchéité, ne font pas partie des bourrelets.

Le pneumatique selon l'invention est destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd », - c'est-à-dire métro, bus, engins de transport routier (camions, tracteurs, remorques), véhicules hors-la-route tels qu'engins agricoles ou de génie civil -, et autres. De manière préférée, le pneumatique selon l'invention est particulièrement adapté pour équiper les véhicules de type tourisme, camionnette et SUV.

### Copolymère à base de styrène et de butadiène

La composition de caoutchouc C comprend un copolymère à base de styrène et de butadiène.

Par l'expression « comprend un copolymère à base de styrène et de butadiène », on entend que la composition de caoutchouc C comprend un ou plusieurs copolymères à base de styrène et de butadiène tels que définis ci-dessous. Ainsi, dans la suite de l'exposé, l'expression au singulier « copolymère à base de styrène et de butadiène » désigne aussi bien un seul copolymère à base de styrène et de butadiène qu'un mélange de copolymères à base de styrène et de butadiène tels que définis ci-dessous.

Au sens de la présente invention on appelle copolymère à base de styrène et de butadiène tout copolymère obtenu par copolymérisation d'un ou plusieurs composés styréniques avec un ou plusieurs butadiène(s). A titre de monomères styrènes conviennent notamment le styrène, les méthylstyrènes, le para-tertiobutylstyrène, les méthoxystyrènes, les chlorostyrènes. A titre de monomères butadiènes conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène et un aryl-1,3-butadiène. Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés.

De manière préférée, le copolymère à base de styrène et de butadiène est un copolymère styrène-butadiène (SBR).

Préférentiellement, le copolymère à base de styrène et de butadiène est constitué de monomères de styrène et de monomères de butadiène, c'est-à-dire que la somme des pourcentages molaires de monomères de styrène et de monomères butadiène dans le copolymère est égale à 100%.

On notera que le SBR peut être préparé en émulsion (ESBR) ou en solution (SSBR). Qu'il s'agisse de ESBR ou de SSBR, le SBR peut être de toute microstructure. On peut utiliser notamment un SBR ayant une faible teneur en styrène, par exemple comprise de plus de 0 à 10% en poids, une teneur en styrène moyenne, par exemple comprise entre 10% et 35% en poids, ou une teneur en styrène élevée, par exemple de 35 à 55% en poids, une teneur en liaisons vinyliques de la partie butadiénique comprise entre 4 % et 70% en poids, et une Tg inférieure à -40°C.

La température de transition vitreuse Tg est mesurée de manière connue par DSC (Differential Scanning Calorimetry), selon la norme ASTM D3418 (1999).

Dans un arrangement préféré, le copolymère à base de styrène et de butadiène porte au moins un groupe alkoxysilane lié au copolymère par son atome de silicium. De tels copolymères et leur procédé d'obtention sont décrits notamment dans les documents WO 2009/133068 et WO 2015/018599. Le groupe alkoxysilane peut se situer en extrémité de la chaîne élastomère et/ou à l'intérieur (ou « dans ») la chaîne élastomère.

De préférence, dans cet arrangement, le copolymère à base de styrène et de butadiène présente l'une quelconque, la combinaison de deux ou trois, ou bien la totalité des caractéristiques suivantes :
- il est un copolymère styrène-butadiène préparé en solution (SSBR),
- sa teneur en styrène est comprise entre 1 et 15%, de préférence entre 1 et 4 %,
- sa teneur en liaisons vinyliques de la partie butadiénique est comprise entre 4 et 25%, de préférence entre 10 et 20%,
- sa Tg est inférieure à -70°C, de préférence comprise entre -100°C et -80°C.

Le groupe alkoxysilane peut être porteur d'une autre fonction portée de préférence par le silicium du groupe alkoxysilane, directement (c'est-à-dire par via une liaison covalente) ou par l'intermédiaire d'un groupe espaceur défini comme étant un atome ou un radical hydrocarboné divalent, linéaire ou ramifié, aliphatique en C₁-C₁₈, saturé ou non, cyclique ou non, ou un radical hydrocarboné divalent aromatique en C₆-C₁₈.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en C₁-C₁₀, de préférence alkyle en C₁-C₄, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

De manière particulièrement avantageuse, le groupe alkoxysilane est porteur d'une fonction amine. Dans ce cas, le groupe alkoxysilane peut également être dénommé « groupe alkoxysilane portant une fonction amine » ou « groupe amino-alkoxysilane », les deux expressions ayant la même signification. La fonction amine peut être une fonction amine primaire, secondaire ou tertiaire. Préférentiellement, la fonction amine est une fonction amine tertiaire, de préférence choisie parmi la diéthylamine et la diméthylamine.

La fonction amine primaire, secondaire ou tertiaire peut être portée, directement (par une liaison covalente) par l'atome de silicium du groupe alkoxysilane du copolymère à base de styrène et de butadiène, ou par l'intermédiaire d'un groupe espaceur. Le groupe espaceur peut être notamment un radical hydrocarboné divalent, linéaire ou ramifié, d'alkyle en C₁₋₁₀, d'aryle en C₆₋₁₈ ou d'aralkyle en C₇₋₁₈. De préférence le groupe espaceur est un radical hydrocarboné linéaire en C₃₋₈. Par C_{a-b} on entend une chaine hydrocarbonée comprenant de *a* à *b* atomes de carbone.

Le copolymère à base de styrène et de butadiène portant un groupe amino-alkoxysilane lié à l'élastomère diénique par l'atome de silicium tel que défini dans la présente, peut être préparé par des techniques connues de l'homme du métier, par exemple selon un procédé approprié décrit dans la demande WO 2009/133068 ou la demande WO 2017/060395.

Le procédé de préparation du copolymère à base de styrène et de butadiène portant un groupe amino-alkoxysilane lié à l'élastomère diénique par l'atome de silicium tel que défini dans la présente, peut notamment comprendre une étape de stripping en vue de récupérer l'élastomère sous forme sèche. Cette étape de stripping peut avoir pour effet d'hydrolyser tout ou partie des fonctions alcoxysilanes hydrolysables dudit copolymère pour les transformer en fonctions silanol. Par exemple, au moins 50% molaire des fonctions peuvent ainsi être hydrolysées.

Ainsi, selon l'invention, le groupe alkoxysilane du copolymère à base de styrène et de butadiène portant un groupe amino-alkoxysilane lié à l'élastomère diénique par l'atome de silicium tel que défini dans la présente, peut être partiellement ou totalement hydrolysé en silanol.

Le copolymère à base de styrène et de butadiène peut également présenter un étoilage supplémentaire par réaction avec un agent d'étoilage connu en soi par exemple à base d'étain ou de silicium. De préférence, le copolymère à base de styrène et de butadiène est fonctionnalisé à l'étain (Sn), c'est-à-dire qu'ils comportent une liaison C-Sn (appelée aussi fonctionnalisation Sn). Ils peuvent être fonctionnalisés simplement (liaison C-Sn en bout de chaine), couplés (atome Sn entre deux chaines) et/ou étoilés (atome Sn entre 3 chaines ou plus) avec un agent de fonctionnalisation, de couplage et/ou d'étoilage. De manière générique on parle pour rassembler tous ces élastomères liés à de l'étain, d'élastomères fonctionnalisés à l'étain.

De manière préférée, la teneur en copolymère à base de styrène et de butadiène dans la composition de caoutchouc C du pneumatique selon l'invention est comprise dans un domaine de valeurs allant de 30 à 70 pce, de préférence de 35 à 65 pce.

### Élastomère isoprénique

La composition de caoutchouc C du pneumatique selon l'invention comprend également un élastomère isoprénique.

Par l'expression « comprend également un élastomère isoprénique », on entend que la composition de caoutchouc C comprend un ou plusieurs élastomères isopréniques tels que définis ci-dessous. Ainsi, dans la suite de l'exposé, l'expression au singulier « élastomère isoprénique » désigne aussi bien un seul élastomère isoprénique qu'un mélange d'élastomères isopréniques tels que définis ci-dessous.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprène-styrène (SIR), d'isoprène-butadiène (BIR) ou d'isoprène-butadiène-styrène (SBIR), et les mélanges de ces élastomères.

De manière préférée, l'élastomère isoprénique est choisi dans le groupe constitué par les polyisoprènes de synthèse, le caoutchouc naturel et leurs mélanges, de préférence dans le groupe constitué par le caoutchouc naturel.

De préférence, la composition de caoutchouc C comprend de 30 à 70 pce d'élastomère isoprénique, préférentiellement de 35 à 65 pce. De manière préférée, la composition de caoutchouc C comprend pour seuls élastomères 30 à 70 pce de copolymère à base de styrène et de butadiène et 70 à 30 pce d'élastomère isoprénique.

L'élastomère isoprénique confère, entre autres, du collant à cru (« tack » en anglais) à la composition. Ainsi, on limite voire on supprime la nécessité d'utiliser une résine dite « tackifiante » dans la composition de caoutchouc C qui pourrait augmenter l'hystérèse de la composition et donc impacter négativement la résistance au roulement du pneumatique selon l'invention.

Bien que cela ne soit pas nécessaire pour la mise en œuvre de la présente invention, la matrice élastomérique de la composition de caoutchouc C peut contenir de manière minoritaire un ou plusieurs élastomères autres que le copolymère à base de styrène et de butadiène et l'élastomère isoprénique utilisés dans le cadre de la présente invention, par exemple du polybutadiène (BR). De préférence, la matrice élastomérique ne contient pas d'autre élastomère ou en contient moins de 20 pce, de préférence moins de 10 pce, de préférence encore moins de 5 pce.

### Charge renforçante

La composition de caoutchouc C du pneumatique selon l'invention comprend de 30 à 70 pce de charge inorganique renforçante.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB de la silice est déterminée selon la norme française NF T 45-007 de novembre 1987 (méthode B).

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Préférentiellement le taux de charge inorganique renforçante est compris dans un domaine allant de 35 à 65 pce, plus préférentiellement de 35 à 50 pce, ces domaines de valeurs permettant d'obtenir un pneumatique dont les propriétés d'endurance et de rigidité sont améliorées

De manière avantageuse, la charge inorganique renforçante comprend majoritairement de la silice. De préférence encore, la charge inorganique renforçante est (ou consiste en) de la silice.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

La teneur en agent de couplage représente préférentiellement de 0,5% à 15% en poids par rapport à la quantité de charge inorganique renforçante, de préférence de 4 à 12%, de préférence encore de 6 à 10% en poids par rapport à la quantité de charge inorganique renforçante. Typiquement, le taux d'agent de couplage est inférieur à 20 pce, préférentiellement compris dans un domaine allant de 6 17 pce, de préférence de 8 à 15 pce. Ce taux peut aisément être ajusté par l'homme du métier selon le taux de charge inorganique utilisé dans la composition.

La composition de caoutchouc C du pneumatique selon l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

Bien que cela ne soit pas nécessaire à la mise en œuvre de la présente invention, la composition de caoutchouc C du pneumatique selon l'invention peut comporter du noir de carbone. De préférence, la composition ne comprend pas de noir de carbone, ou en comprend moins de 10 pce, de préférence moins de 5 pce, et de manière préférée moins de 2 pce.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

### Système de réticulation

La composition de caoutchouc C comprend un système de réticulation qui peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 2,5 et 10 pce, en particulier entre 3 et 8 pce. L'accélérateur de vulcanisation est utilisé à un taux préférentiel compris dans un domaine allant de 0,4 à 4 pce, de préférence allant de 0,5 à 3,5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

La composition de caoutchouc C comprise dans le pneumatique selon l'invention peut également comprendre tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M).

De manière préférée, la composition de caoutchouc C ne comprend pas de résine renforçante ou en comprend moins de 10 pce, préférentiellement moins de 5 pce, de manière préférée moins de 2 pce, préférentiellement moins de 1 pce et de manière très préférée moins de 0,2 pce.

Par résine renforçante, on entend une résine connue de l'homme du métier pour rigidifier des compositions de caoutchouc, rigidité mesurée par exemple par le Module de Young, selon la norme ASTM 412-98a, ou le module complexe de cisaillement dynamique G^{∗} selon la norme ASTM D 5992-96.

### Fabrication des compositions

La composition de caoutchouc C est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 130°C et 170°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 1 et 30 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme couche interne dans un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, de préférence sous pression, pendant un temps suffisant qui peut varier par exemple entre 5 et 90 min.

### Description des figures

La **figure 1** représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La **figure 2** représente schématiquement une vue en perspective partielle d'un autre pneumatique 10 selon l'art antérieur et illustre les différentes composantes du pneumatique. Le pneumatique 10 comprend une armature de carcasse 60 constituée de fils 61 enrobés de mélange caoutchouteux, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une couche d'étanchéité, dite « gomme intérieure » 50 (« inner liner » en anglais) en composition caoutchouteuse imperméable au gaz de gonflage, recouvrant la surface intérieure du pneumatique.

La **figure 3** représente un pneumatique 10 monté sur une jante de montage 5 et gonflé à sa pression de service, la « hauteur radiale » H du pneumatique correspondant à la distance radiale entre le point 71 radialement le plus à l'intérieur de la structure annulaire de renforcement 70 du bourrelet et le point 41 radialement le plus à l'extérieur de la bande de roulement 40.

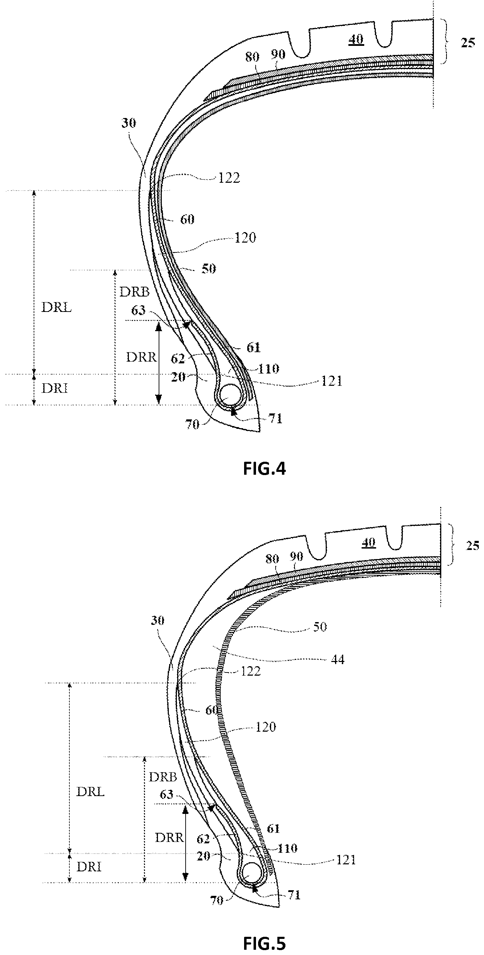

La **figure 4** représente schématiquement, en coupe radiale, la zone basse d'un pneumatique comprenant une bande latérale. Par zone basse, on entend la zone du pneumatique comprenant le bourrelet du pneumatique. Le pneumatique comporte deux bourrelets 20 destinés à entrer en contact avec une jante de montage (non représentée), chaque bourrelet 20 comportant au une structure annulaire de renforcement, en l'occurrence une tringle 70. Deux flancs 30 prolongent les bourrelets 20 radialement vers l'extérieur et s'unissent dans un sommet 25 comprenant une armature de sommet formée d'une première couche de renforts 80 et d'une deuxième couche de renforts 90, et surmontée radialement d'une bande de roulement 40. Chaque couche de renforts comprend des renforts filaires, enrobés dans une matrice formée de mélange caoutchouteux. Les renforts de chaque couche de renforts sont substantiellement parallèles entre eux ; les renforts des deux couches sont croisés d'une couche à l'autre selon un angle d'environ 20°, comme cela est bien connu de la personne du métier pour les pneumatiques dits radiaux.

Le pneumatique comporte encore une armature de carcasse 60 qui s'étend depuis les bourrelets 20 à travers les flancs 30 jusqu'au sommet 25. Cette armature de carcasse 60 comporte ici des renforts filaires orientés substantiellement radialement, c'est-à-dire faisant avec la direction circonférentielle un angle supérieur ou égal à 65° et inférieur ou égal à 90°.

L'armature de carcasse 60 comporte une pluralité d'éléments de renforcement de carcasse et est ancrée dans les deux bourrelets 20 par un retournement autour de la tringle 70, de manière à former dans chaque bourrelet un brin aller 61 et un brin retour 62. Le brin retour s'étend radialement à l'extérieur jusqu'à une extrémité 63 située à une distance radiale DRR du point 71 radialement le plus à l'intérieur de la structure annulaire de renforcement du bourrelet, la distance radiale DRR étant préférentiellement supérieure ou égale à 15 % de la hauteur radiale H du pneumatique.

Chaque bourrelet comporte un bourrage tringle 110, le bourrage s'étendant radialement vers l'extérieur depuis la tringle 70 au contact de ladite armature de carcasse 60 et, pour une bonne partie, entre le brin aller 61 et le brin retour 62 de l'armature de carcasse 60.

Le bourrage tringle 110 s'étend radialement à l'extérieur du point 71 radialement le plus à l'intérieur de la structure annulaire de renforcement du bourrelet, jusqu'à une distance radiale DRB dudit point, la distance radiale DRB étant préférentiellement supérieure ou égale à 20 % de la hauteur radiale H du pneumatique. De préférence, DRB est inférieur à H/2.

La surface intérieure du pneumatique est recouverte d'une gomme intérieure 50.

Une bande latérale 120 placée axialement à l'extérieur de l'armature de carcasse et du bourrage, s'étend radialement à l'extérieur d'une extrémité 121 radialement intérieure située à une distance radiale DRI du point 71 radialement le plus à l'intérieur de la structure annulaire de renforcement 70 du bourrelet, DRI étant préférentiellement inférieure ou égale à 20 % de la hauteur radiale H du pneumatique, jusqu'à une extrémité 122 radialement extérieure, la distance radiale DRL entre l'extrémité 122 radialement extérieure de la bande latérale et l'extrémité 121 radialement intérieure de la bande latérale étant préférentiellement supérieure ou égale à 25% de la hauteur radiale H du pneumatique.

La **figure 5** présente un pneumatique adapté pour le roulage à plat. La numération des éléments est identique à la figure 4. Le pneumatique de la figure 5 comprend un insert de flanc 44, axialement intérieurs à l'armature de carcasse 60. Ces inserts 44 avec leur section radiale caractéristique en forme de croissant sont destinés à renforcer le flanc. Chaque insert 44 est fabriqué à partir d'une composition de caoutchouc à base d'une composition de caoutchouc réticulable. Chaque insert de flanc 44 est susceptible de contribuer à supporter une charge correspondant à une partie du poids du véhicule lors d'une situation de roulage à plat. Les inserts de flanc 44 sont situés axialement extérieurs à la couche d'étanchéité 50. Ainsi, les inserts de flanc 44 sont disposés axialement entre l'armature de carcasse 32 et la couche d'étanchéité 50.

### Exemples

### - Méthodes de mesure

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA₁₀, sur des échantillons cuits 25 minutes à 150°C. Les résultats sont exprimés en base 100 par rapport à la composition témoin « T1 ». Lorsque la valeur est supérieure à 100, la composition présente un module MA₁₀, et donc une rigidité, plus élevé que la composition témoin.

Ont également été mesurés les contraintes à la rupture (en MPa) et les allongements à la rupture (AR en %), à 23°C ± 2°C, selon la norme NF T 46-002, sur des échantillons cuits 25 minutes à 150°C. L'énergie rupture présentée dans les résultats est égale au produit de l'allongement rupture par la contrainte rupture. Elle est exprimée en MJ.

### Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide), sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis sont soumises à une étape de cuisson à 150°C pendant 25 min avant la mesure de leurs propriétés physiques ou mécaniques.

### Exemple

Des essais ont été réalisés avec différentes compositions de caoutchouc présentées au tableau 1, à base de caoutchouc naturel ou d'un coupage de caoutchouc naturel et d'un élastomère styrène-butadiène (SBR). La composition T1 correspond à une composition classique utilisée pour la constitution de bourrages tringle et/ou de bandes latérales. La composition T2 correspond à une composition utilisable pour la constitution de bourrages tringle et/ou de bandes latérales conforme à l'enseignement du document FR 2 940 189.

On mesure pour chaque composition à cru, c'est-à-dire avant vulcanisation, la valeur de plasticité Mooney exprimée en UM (unité Mooney). On mesure ensuite à cuit, donc après vulcanisation, l'allongement à rupture (AR), l'énergie de rupture et le module d'élasticité sous tension à 10% d'allongement (MA₁₀).

Le couple allongement à rupture-énergie de rupture est un descripteur de l'endurance du matériau. Un ensemble de valeur plus élevé pour une composition donnée sera ainsi un indicateur d'une endurance améliorée pour un pneumatique incorporant un bourrage tringle et/ou une bande latérale comprenant cette composition.

**Tableau 1**

| | T1 | T2 | T3 | C1 | C2 | C3 | C4 | C5 | C6 |
|---|---|---|---|---|---|---|---|---|---|
| NR (1) | 100 | 100 | 50 | 50 | 50 | 50 | 50 | 50 | 50 |
| SBR-1 (2) | 0 | 0 | 0 | 50 | 50 | 50 | 0 | 0 | 0 |
| SBR-2 (3) | 0 | 0 | 50 | 0 | 0 | 0 | 50 | 50 | 50 |
| N326 | 50 | 0 | 0 | 0 | 0 | 0 | 0 | 0 | 0 |
| N990 | 0 | 50 | 50 | 0 | 0 | 0 | 0 | 0 | 0 |
| Silice (4) | 0 | 0 | 0 | 35 | 45 | 55 | 35 | 45 | 55 |
| Agent de couplage (5) | 0 | 0 | 0 | 7.1 | 8.7 | 10.7 | 7.1 | 8.7 | 10.7 |
| Huile (6) | 2 | 2 | 2 | 2 | 2 | 2 | 2 | 2 | 2 |
| Additifs | 10 | 10 | 10 | 10 | 10 | 10 | 10 | 10 | 10 |
| Système de vulcanisa tion | 8,2 | 8,2 | 8,2 | 8,2 | 8,2 | 8,2 | 8,2 | 8,2 | 8,2 |
| *Dont soufre insoluble* | *7* | *7* | *7* | *7* | *7* | *7* | *7* | *7* | *7* |
| **Propriétés à cru** | | | | | | | | | |
| Plasticité Mooney (UM) | 60 | 54 | 62 | 89 | 103 | 120 | 91 | 108 | 124 |
| **Propriétés à cuit** | | | | | | | | | |
| AR (%) | 290 | 220 | 215 | 385 | 349 | 274 | 340 | 300 | 275 |
| Energie Rupture (MJ) | 24 | 29 | 28 | 47 | 52 | 41 | 53 | 48 | 49 |
| Rigidité MA₁₀ (Base 100=T1) | 100 | 87 | 71 | 73 | 103 | 159 | 81 | 108 | 162 |

| | | | | | | | | | |
|---|---|---|---|---|---|---|---|---|---|
| Compositions en pce (1) Caoutchouc naturel (2) SBR-1 : SBR avec 27% de motifs Styrène, 24% de motifs vinyl et 46% de motifs 1-4trans, Tg : -48°C (3) SBR-2 : SBR fonctionnalisé amino-alcoxysilane avec 2,5% de motifs Styrène, 13% de motifs vinyl et 50% de motifs 1-4trans, Tg : -88°C (4) Silice « Zeosil 1165 MP » de la société Rhodia, surface BET de environ 160 m²/g (5) TESPT, Si69 de la société Degussa (6) Huile Paraffinique | | | | | | | | | |

Le système de vulcanisation comprend le soufre insoluble, l'accélérateur (N-ter-butyl-2-benzothiazyle sulfénamide « Santocure TBBS » de la société Flexsys) et le retardateur (N-cyclohexylthiophtalimide commercialisé sous dénomination « Vulkalent G » par la société Lanxess) de vulcanisation. Les additifs comprennent l'oxyde de zinc (grade industriel, société Umicore), l'acide stéarique (« Pristerene 4931 » de la société Uniqema) et l'antioxydant (N-1,3-diméthylbutyl-N-phénylparaphénylènediamine « Santoflex 6-PPD » de la société Flexsys).

On observe que les compositions conformes à l'invention présentent à cru une plasticité suffisante pour présenter une bonne processabilité. L'allongement à rupture et l'énergie de rupture sont améliorées pour les compositions conformes, sans que cela se fasse au détriment de la rigidité. Les compositions selon l'invention présentent donc un excellent compromis rigidité-endurance/processabilité par rapport aux compositions connues.

## Revendications

1. Pneumatique comprenant deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature de carcasse étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
et optionnellement une couche interne située axialement à l'extérieur de l'armature de carcasse et du bourrage tringle, dite bande latérale, **caractérisé en ce que** les bourrelets comprennent une composition de caoutchouc C à base de :
- un copolymère à base de styrène et de butadiène ;
- un élastomère isoprénique ;
- de 30 à 70 pce de charge inorganique renforçante ou d'une charge organique renforçante recouverte d'une couche inorganique ;
- un système de réticulation.

2. Pneumatique selon la revendication précédente dans lequel le deuxième élastomère de la composition de caoutchouc C est choisi dans le groupe constitué par les polyisoprènes de synthèse, le caoutchouc naturel et leurs mélanges.

3. Pneumatique selon l'une quelconque des revendications précédentes dans lequel le copolymère à base de styrène et de butadiène est un copolymère styrène-butadiène.

4. Pneumatique selon l'une quelconque des revendications 1 à 2 dans lequel le copolymère à base de styrène et de butadiène porte au moins un groupe alkoxysilane lié au copolymère par son atome de silicium.

5. Pneumatique selon la revendication précédente dans lequel le copolymère à base de styrène et de butadiène présente l'une quelconque, la combinaison de deux ou trois, ou bien la totalité des caractéristiques suivantes :
- il est un copolymère styrène-butadiène préparé en solution (SSBR),
- sa teneur en styrène est comprise entre 1 et 15% en poids, de préférence entre 1 et 4 % en poids,
- sa teneur en liaisons vinyliques de la partie butadiénique est comprise entre 4 et 25% en poids, de préférence entre 10 et 20% en poids,
- sa température de transition vitreuse, Tg, est inférieure à -70°C, de préférence comprise entre -100°C et -80°C.

6. Pneumatique selon l'une quelconque des revendications précédentes dans lequel la teneur en copolymère à base de styrène et de butadiène dans la composition de caoutchouc C est comprise dans le domaine de valeurs allant de 30 à 70 pce, préférentiellement dans le domaine de valeurs allant de 35 à 65 pce.

7. Pneumatique selon l'une quelconque des revendications précédentes dans lequel la composition de caoutchouc C comprend pour seuls élastomères 30 à 70 pce de copolymère à base de styrène et de butadiène et 70 à 30 pce d'élastomère isoprénique.

8. Pneumatique selon l'une quelconque des revendications précédentes dans lequel le taux de charge inorganique renforçante de la composition de caoutchouc C est compris dans le domaine de valeurs allant de 35 à 65 pce, et de manière préférée de 35 à 50 pce.

9. Pneumatique selon l'une quelconque des revendications précédentes dans lequel la charge inorganique renforçante comprend majoritairement de la silice, et préférentiellement est de la silice.

10. Pneumatique selon l'une quelconque des revendications précédentes dans lequel la composition de caoutchouc C ne comprend pas de noir de carbone ou en comprend moins de 10 pce, de préférence moins de 5 pce, et de manière préférée moins de 2 pce.

11. Pneumatique selon l'une quelconque des revendications précédentes dans lequel le système de réticulation est un système de vulcanisation à base de soufre moléculaire et/ou d'un agent donneur de soufre.

12. Pneumatique selon la revendication précédente dans lequel le système de vulcanisation comprend entre 2,5 et 10 pce de soufre, de préférence entre 3 et 8 pce.

13. Pneumatique selon l'une quelconque des revendications précédentes dans lequel chaque bourrelet comprend une bande latérale constituée de ladite composition de caoutchouc C.

14. Pneumatique selon l'une quelconque des revendications précédentes dans lequel le bourrage tringle comprend ladite composition de caoutchouc C.

15. Pneumatique selon l'une quelconque des revendications précédentes comprenant deux inserts de flanc, situés axialement entre l'armature de carcasse et la couche d'étanchéité.

## Patentansprüche

1. Reifen, umfassend zwei Wülste, die dazu bestimmt sind, mit einer Montagefelge in Kontakt zu gelangen, zwei Seitenwände, welche die Wülste radial nach außen verlängern und sich in einem Scheitel vereinen, der einen Laufstreifen umfasst, mindestens eine Karkassenbewehrung, die sich von den Wülsten aus über die Seitenwände bis hin zum Scheitel erstreckt, wobei die Karkassenbewehrung in den beiden Wülsten verankert ist, eine Dichtungsschicht, die sich zwischen den beiden Wülsten erstreckt und axial innerhalb der Karkassenbewehrung gelegen ist, wobei jede Wulst mindestens beinhaltet:
- eine ringförmige Verstärkungsstruktur, Wulstkern genannt;
- eine innere Schicht, die sich von dem Wulstkern aus und in Kontakt mit der Karkassenbewehrung radial nach außen erstreckt, Wulstkernreiter genannt;
und optional eine innere Schicht, die axial außerhalb der Karkassenbewehrung und des Wulstkernreiters gelegen ist, Seitenstreifen genannt, **dadurch gekennzeichnet, dass** die Wülste eine Kautschukzusammensetzung C umfassen auf Basis:
- eines Copolymers auf Basis von Styrol und Butadien;
- eines Isoprenelastomers;
- von 30 bis 70 pce eines verstärkenden anorganischen Füllstoffs oder eines mit einer anorganischen Schicht überzogenen verstärkenden anorganischen Füllstoffs;
- eines Vernetzungssystems.

2. Reifen nach dem vorhergehenden Anspruch, bei dem das zweite Elastomer der Kautschukzusammensetzung C aus der Gruppe gewählt ist, die aus Synthesepolyisoprenen, Naturkautschuk und ihren Mischungen besteht.

3. Reifen nach einem der vorhergehenden Ansprüche, bei dem das Copolymer auf Basis von Styrol und Butadien ein Styrol-Butadien-Copolymer ist.

4. Reifen nach einem der Ansprüche 1 bis 2, bei dem das Copolymer auf Basis von Styrol und Butadien mindestens eine Alkoxysilangruppe trägt, die über ihr Siliciumatom an das Copolymer gebunden ist.

5. Reifen nach dem vorhergehenden Anspruch, bei dem das Copolymer auf Basis von Styrol und Butadien ein beliebiges, die Kombination von zwei oder drei oder aber alle der folgenden Merkmale aufweist:
- es ist ein in Lösung zubereitetes Styrol-Butadien-Copolymer (SSBR),
- sein Styrolgehalt beträgt zwischen 1 und 15 Gew.-%, bevorzugt zwischen 1 und 4 Gew.-%,
- sein Gehalt an Vinylbindungen des Butadienteils beträgt zwischen 4 und 25 Gew.-%, bevorzugt zwischen 10 und 20 Gew.-%,
- seine Glasübergangstemperatur Tg beträgt weniger als -70 °C, bevorzugt zwischen -100 °C und -80 °C.

6. Reifen nach einem der vorhergehenden Ansprüche, bei dem der Gehalt an Copolymer auf Basis von Styrol und Butadien in der Kautschukzusammensetzung C im Wertebereich von 30 bis 70 pce, bevorzugt im Wertebereich von 35 bis 65 pce liegt.

7. Reifen nach einem der vorhergehenden Ansprüche, bei dem die Kautschukzusammensetzung C als einzige Elastomere 30 bis 70 pce Copolymer auf Basis von Styrol und Butadien und 70 bis 30 pce Isoprenelastomer umfasst.

8. Reifen nach einem der vorhergehenden Ansprüche, bei dem der Anteil an verstärkendem anorganischem Füllstoff der Kautschukzusammensetzung C im Wertebereich von 35 bis 65 pce und bevorzugt von 35 bis 50 pce liegt.

9. Reifen nach einem der vorhergehenden Ansprüche, bei dem der verstärkende anorganische Füllstoff mehrheitlich Siliciumdioxid umfasst und bevorzugt Siliciumdioxid ist.

10. Reifen nach einem der vorhergehenden Ansprüche, bei dem die Kautschukzusammensetzung C keinen Ruß umfasst oder weniger als 10 pce, bevorzugt weniger als 5 pce und noch bevorzugter weniger als 2 pce davon umfasst.

11. Reifen nach einem der vorhergehenden Ansprüche, bei dem das Vernetzungssystem ein Vulkanisationssystem auf Basis von molekularem Schwefel und/oder eines Schwefeldonors ist.

12. Reifen nach dem vorhergehenden Anspruch, bei dem das Vulkanisationssystem zwischen 2,5 und 10 pce, bevorzugt zwischen 3 und 8 pce Schwefel umfasst.

13. Reifen nach einem der vorhergehenden Ansprüche, bei dem jede Wulst einen Seitenstreifen umfasst, der aus der Kautschukzusammensetzung C besteht.

14. Reifen nach einem der vorhergehenden Ansprüche, bei dem der Wulstkernreiter die Kautschukzusammensetzung C umfasst.

15. Reifen nach einem der vorhergehenden Ansprüche, umfassend zwei Seitenwandeinsätze, die axial zwischen der Karkassenbewehrung und der Dichtungsschicht gelegen sind.

## Claims

1. Tyre comprising two beads intended to come into contact with a mounting rim, two side walls extending the beads radially outwards and coming together in a crown comprising a tread, at least one carcass reinforcement extending from the beads through the side walls as far as the crown, said carcass reinforcement being anchored in the two beads, an airtight layer extending between the two beads and located axially inside the carcass reinforcement, each bead comprising at least:
- an annular reinforcing structure known as a bead wire;
- an internal layer extending radially outwards from the said bead wire and in contact with the said carcass reinforcement, known as bead-wire filling;
and optionally an internal layer located axially outside the carcass reinforcement and the bead-wire filling, known as side strip,
**characterized in that** the beads comprise a rubber composition C based on:
- a copolymer based on styrene and butadiene;
- an isoprene elastomer;
- from 30 to 70 phr of reinforcing inorganic filler or of a reinforcing organic filler covered with an inorganic layer;
- a crosslinking system.

2. Tyre according to the preceding claim, in which the second elastomer of the rubber composition C is chosen from the group consisting of synthetic polyisoprenes, natural rubber and their mixtures.

3. Tyre according to either one of the preceding claims, in which the copolymer based on styrene and butadiene is a styrene/butadiene copolymer.

4. Tyre according to either one of Claims 1 and 2, in which the copolymer based on styrene and butadiene bears at least one alkoxysilane group bonded to the copolymer via its silicon atom.

5. Tyre according to the preceding claim in which the copolymer based on styrene and butadiene exhibits any one, the combination of two or three, or else all of the following characteristics:
- it is a styrene/butadiene copolymer prepared in solution (SSBR),
- its styrene content is between 1% and 15% by weight, preferably between 1% and 4% by weight,
- its content of vinyl bonds of the butadiene part is between 4% and 25% by weight, preferably between 10% and 20% by weight,
- its glass transition temperature, Tg, is less than -70°C, preferably of between -100°C and -80°C.

6. Tyre according to any one of the preceding claims, in which the content of copolymer based on styrene and butadiene in the rubber composition C is within the range of values extending from 30 to 70 phr, preferentially within the range of values extending from 35 to 65 phr.

7. Tyre according to any one of the preceding claims, in which the rubber composition C comprises, for sole elastomers, from 30 to 70 phr of copolymer based on styrene and butadiene and from 70 to 30 phr of isoprene elastomer.

8. Tyre according to any one of the preceding claims, in which the content of reinforcing inorganic filler of the rubber composition C is within the range of values extending from 35 to 65 phr and preferably from 35 to 50 phr.

9. Tyre according to any one of the preceding claims, in which the reinforcing inorganic filler predominantly comprises silica and preferential is silica.

10. Tyre according to any one of the preceding claims, in which the rubber composition C does not comprise carbon black or comprises less than 10 phr, preferably less than 5 phr and in a preferred way less than 2 phr thereof.

11. Tyre according to any one of the preceding claims, in which the crosslinking system is a vulcanization system based on molecular sulfur and/or on a sulfur-donating agent.

12. Tyre according to the preceding claim, in which the vulcanization system comprises between 2.5 and 10 phr of sulfur, preferably between 3 and 8 phr.

13. Tyre according to any one of the preceding claims, in which each bead comprises a side strip formed of said rubber composition C.

14. Tyre according to any one of the preceding claims, in which the bead-wire filling comprises said rubber composition C.

15. Tyre according to any one of the preceding claims, comprising two side wall inserts, located axially between the carcass reinforcement and the airtight layer.
